# NEUE EUROPÄISCHE PATENTSCHRIFT

(11) **EP 0 190 411 B2**
(45) Veröffentlichungstag und Bekanntmachung des Hinweises auf die Entscheidung über den Einspruch: **28.07.1993**
(45) Hinweis auf die Patenterteilung: 04.10.1989
(21) Anmeldenummer: 85114289.3
(22) Anmeldetag: 09.11.1985
(51) Int. Cl.: B60T 13/66

(54) **Sollwertgeber**
Set-point adjuster
Ajusteur de consigne

(30) Priorität: 07.02.1985 DE 3504096
(43) Veröffentlichungstag der Anmeldung: 13.08.1986
(73) Patentinhaber: WABCO Westinghouse Fahrzeugbremsen GmbH, D-30453 Hannover (DE)
(72) Erfinder: Petersen, Erwin, Dr.-Ing., D-3050 Wunstorf 1 (DE)
(74) Vertreter: Schrödter, Manfred, Dipl.-Ing.

(56) Entgegenhaltungen:
- EP-A- 0 075 082
- DE-A- 2 209 091
- DE-A- 2 840 262
- DE-A- 2 937 657
- DE-A- 3 149 110
- DE-A- 3 212 929

## Beschreibung

Die Erfindung bezieht sich auf einen Sollwertgeber gemäß dem Oberbegriff des Patentanspruchs 1.

In elektrisch gesteuerten Bremsanlagen wird für die Ansteuerung der Elektronik ein im Trittplatten-Bremsventil enthaltener Sensor, z. B. ein Schiebewiderstand, benötigt. Ein derartiges, für zwei Kreise ausgelegtes Bremsventil mit zwei eingebauten elektrischen Signalgebern ist z. B. aus der DE-A-3 149 110 bekannt. Ein Bremsventil mit angebautem Potentiometer ist aus der DE-A-2 937 657 bekannt.

An Bremsanlagen für Kraftfahrzeuge sind naturgemäß besonders hohe Sicherheits-Anforderungen zu stellen. So muß z. B. bei Ausfall eines der beiden Signalgeber zumindest eine eingeschränkte Bremswirkung möglich sein.

Dasselbe gilt auch für den Fall, daß einer der beiden Signalgeber bzw. Sensoren ein fehlerhaftes Signal abgibt. Da in diesem Fall unter Umständen nicht bekannt ist, welcher der beiden Sensoren gestört ist, ist es notwendig, geeignete Kriterien zu finden, um das gestörte Signal herauszufinden und unberücksichtigt zu lassen.

Hierzu wäre es naheliegend, drei Sensoren zu verwenden und dann im Fehlerfall das Signal des einen gestörten Sensors abzuschalten. In diesem Fall wird vorausgesetzt, daß die übereinstimmenden Signale der beiden übrigen Sensoren ungestört sind. Nachteilig an dieser Lösung ist jedoch der erhöhte Bauaufwand.

Die bekannte und naheliegende Verwendung eines Potentiometers bzw. Weggebers als elektrisches Bauteil zur Ansteuerung der elektrischen Bremsanlage weist gewisse Nachteile auf. So kann das Wegsignal bei Änderung der Federcharakteristik, vor allem bei Kälte, streuen. Hierdurch ist eine ausreichende Wiederholgenauigkeit unter den verschiedenen Betriebsbedingungen nicht möglich.

Der Erfindung liegt die Aufgabe zugrunde, einen Sollwertgeber der eingangs genannten Art anzugeben, welcher bei geringem Bauaufwand ein Höchstmaß an Sicherheit und Genauigkeit bietet.

Diese Aufgabe wird durch die im Patentanspruch 1 enthaltene Erfindung gelöst. Die Unteransprüche enthalten zweckmäßige Weiterbildungen der Erfindung.

Die Erfindung wird im folgenden anhand einer Zeichnung näher erläutert. Diese zeigt in
Fig. 1 ein Schnittbild eines Trittplatten-Bremsventils gemäß der Erfindung
Fig. 2 ein schematisches Blockschaltbild einer elektronischen Auswerteschaltung fürdie beiden im Bremsventil eingebauten Sensoren.

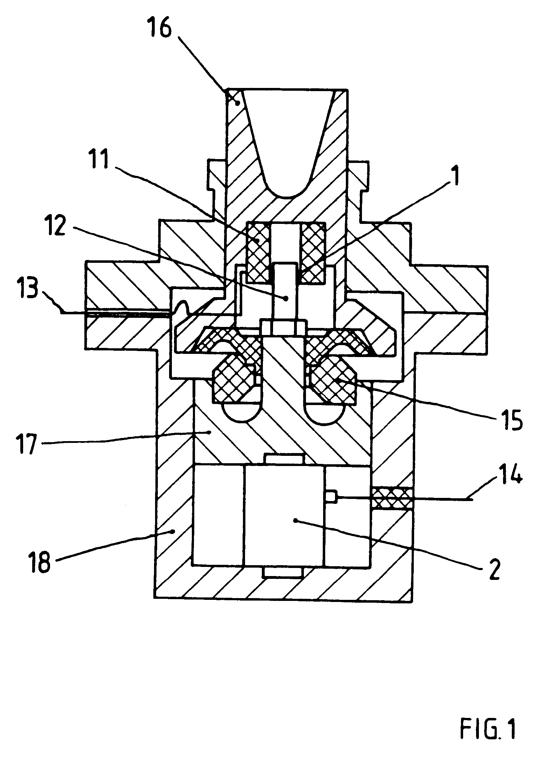

In Fig. 1 ist der untere Teil eines Trittplatten-Bremsventils (ohne Trittplatte) dargestellt. Die vom Fahrer betätigte Trittplatte drückt auf ein Teil 16. Dieses gibt die Fußkraft über eine ringförmige Gummifeder 15 an ein Teil 17 weiter. Anstelle einer Gummifeder kann auch z. B. eine Stahlfeder vorgesehen sein. Der Weg der Trittplatte wird erfaßt von einem Wegsensor 1, welcher aus einer Spule 11 und einem Eisenkern 12 besteht. Der Wegsensor 1 hat eine Ausgangsleitung 13.

Die vom Fahrer aufgebrachte Fußkraft wird gemessen durch einen Kraftsensor 2, der zwischen dem Teil 17 und dem Gehäuse 18 des Trittplatten-Bremsventils eingespannt ist. Der Kraftsensor 2 gibt ein elektrisches Signal als Führungsgröße zur Ansteuerung einer elektrischen Bremsanlage über eine Leitung 14 nach außen.

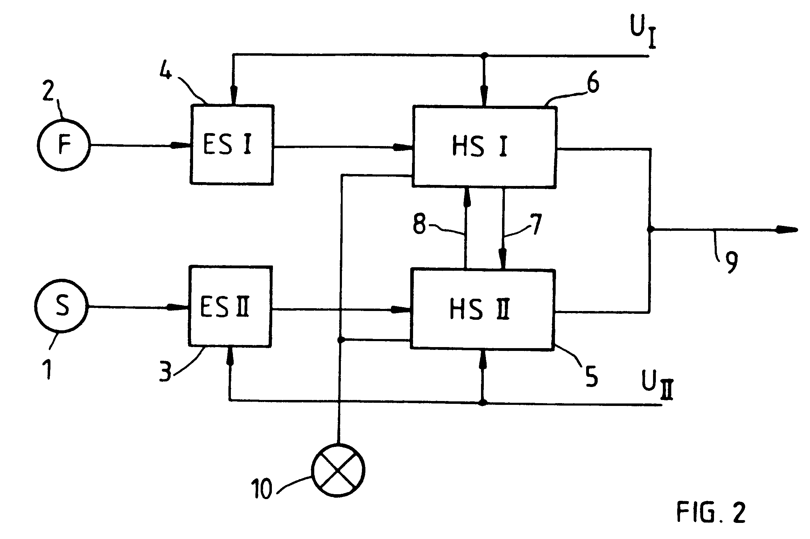

In der Fig. 2 ist schematisch ein Blockschaltbild zur Auswertung der Signale der beiden Sensoren 1 und 2 dargestellt. Das Signal des Sensors 2 (Kraftsensor) wird einer Eingangsschaltung 4 (ES I) zugeführt, und hier gefiltert und digitalisiert. Das Signal geht weiter über einen Hauptschaltkreis 6 (HS I) zu einer Ausgangsleitung 9. Im Hauptschaltkreis 6 wird, wie weiter unten erläutert wird, das Sensorsignal auf Plausibilitätgeprüft.

Entsprechend gelangt das Ausgangssignal des Sensors 1 (Wegsensor) über einen Eingangschaltkreis 3 (ES II) zu einem zweiten Hauptschaltkreis 5 (HS II) und von hier zur gemeinsamen Ausgangsleitung 9. Die Hau ptschalt kreise 5 und 6 können über Verbindungsieitungen 7, 8 gegenseitig Daten austauschen. Die beiden Zweige ES I, HS 1 und ES II, HS 11 werden von zwei getrennten Spannungsquellen U₁ und U_{II} versorgt. Die Schaltungen 5 und 6 sind so ausgebildet, daß im fehlerfreien Zustand beider Sensoren 1 und 2 nur das Ausgangssignal des Sensors 2 (Kraftsensor) auf die Ausgangsleitung 9 geschaltet ist. Hierdurch erhalten die nachfolgend angeschlossenen zwei Bremskreise (nicht dargestellt) immer den gleichen Sollwert, auch wenn die Ausgangsspannungen der Sensoren 1 und 2 mit längerer Betriebsdauer auseinander driften.

Die Plausibilität der Ausgangssignale der beiden Sensoren 1 und 2 wird nach den untenstehenden vier Grundsätzen überwacht.

Als erster Grundsatz wird herangezogen, daß sich die beiden Sensorsignale nicht schneller ändern können, als es beim Bremsen durch einen sehr schnellen Fahrer bzw. beim Bremslösen von der Rückholfeder bewirkt werden kann. Steigt demnach das Signal eines Sensors schneller an oder fällt schneller ab als zulässig, wird von dem entsprechenden Hauptschaltkreis 5 oder 6 auf einer Warnlampe 10 eine Störung angezeigt. Die weiteren Bremsungen werden dann durch den intakten Sensor gesteuert.

Steigen beide Werte der Sensoren 1 und 2 unzulässig schnell an, wird ebenfalls "Störung" angezeigt. Wenn in diesem Fall das Signal des Wegsensors 1 bis auf den Endwert ansteigt und dann konstant bleibt und gleichzeitig das Signal des Sensors 2 einen höheren als den entsprechenden Kraftwert anzeigt, dann wird der Wunsch nach einer Gewaltbremsung unterstellt und ein entsprechend hoher Bremsimpuls ausgelöst.

Fallen die Signale beider Sensoren 1 und 2 unzulässig schnell ab, dann wird die Bremskraft langsam abgebaut. Hierdurch kommt das Fahrzeug zum Stehen, wobei nötigenfalls die Handbremse mitbenutzt werden kann.

Als zweites Kriterium wird benutzt, daß im ungebremsten Zustand beide Sensoren 1 und 2 definierte Ausgangswerte abgeben, die ungleich Null und ungleich dem Maximum sein müssen. Im ungestörten Zustand nehmen die Sensoren auch bei maximalen physikalischen Größen der Bremsbetätigung nicht die elektrisch möglichen Maximalwerte ein.

Nimmt im gestörten Fall der Wegsensor 1 einen unmöglich hohen Wert oder Null ein, wird bei Andauern über eine vorbestimmte Zeitdauer ein Fehler angezeigt.

Nimmt der Kraftsensor einen unmöglich hohen Wert oder Null ein, dann wird der Wert des Wegsensors als Führungsgröße übernommen und bei Andauern über eine vorbestimmte Zeit eine Störung angezeigt.

Nehmen beide Sensoren 1 und 2 unmögliche Werte ein, dann wird langsam eingebremst und ebenfalls eine Störung angezeigt.

Als drittes Kriterium wird benutzt, daß die Signale der Sensoren über längere Zeit nur dann konstant sein können, wenn nicht gebremst wird, das Bremspedal also an einem mechanischen Anschlag anliegt. Dagegen wird während einer Betriebsbremsung das Fußpedal immer leichte Bewegungen ausüben.

Bleibt der Wegsensor auf einem Wert konstant, welcher weder der unbetätigten Stellung noch dem Gummifederanschlag entspricht, dann wird nach einer Verzögerungszeit eine Störung angezeigt und zum Bremsen der Kraftsensor 2 benutzt.

Bleibt der Kraftsensor im üblichen Betriebsbereich konstant, dann wird die Bremskraft durch den Hauptschaltkreis 6 (HS I) kurzzeitig und leicht abgebaut. Der Fahrer wird hierauf durch verstärktes Bremsen reagieren. Bleibt der Ausgangswert des Kraftsensors trotzdemkonstant, während der Wegsensor 1 reagiert, wird Störung angezeigt und der Wert des ungestörten Wegsensors 1 übernommen.

Bleiben die Ausgangswerte beider Sensoren 1 und 2 im üblichen Betriebsbereich über eine längere Zeit konstant, dann wurde offenbar im Fahrzeug eine Bremsmaschine oder ein fester Anschlag benutzt. In diesem Fall wird der Wert des Kraftsensors 2 übernommen.

Als vierter Grundsatz wird die Tatsache benutzt, daß im ungestörten Zustand beide Ausgangssignale in jedem Betriebszustand bzw. Bremszustand in einer festen, toleranzbehafteten Zuordnung stehen müssen.

Weichen also die Signale der Sensoren 1 und 2 von dieser Zuordnung ab, dann wird eine Störung angezeigt.

Die oben erläuterten Plausibilitäts-Prüfungen sind natürlich auch auf Anordnungen mit zwei gleichen oder unterschiedlichen Kraftsensoren anwendbar.

## Patentansprüche

1. Sollwertgeber, zur Erzeugung einer elektrischen Steuergroße für ein Bremspedal in einem Kraftfahrzeug zurAnsteuerung einer elektrischen Bremsanlage, gekennzeichnet durch eine Parallelschaltung und nachfolgende Auswertung von mindestens zwei nach unterschiedlichen Prinzipien arbeitenden Sensoren welche die Kraft bzw. den Weg des Pedals messen und die jeweils ein elektrisches Signal erzeugen und vom denen einer ein Kraftsensor ist.

2. Sollwertgeber nach Anspruch 1, gekennzeichnet durch die Parallelschaltung eines Wegsensors (1) und eines Kraftsensors (2).

3. Sollwertgeber nach Anspruch 2, dadurch gekennzeichnet, daß die Ausgangssignale des Wegsensors (1) und des Kraftsensors (2) in getrennten elektronischen Eingangsschaltungen (3, 4) gefiltert und/oder digitalisiert werden.

4. Sollwertgeber nach Anspruch 1 bis 3, dadurch gekennzeichnet, daß den Eingangsschaltungen (3, 4) elektronische Hauptschaltungen (5, 6) nachgeordnet sind, die über Leitungen (7, 8) Informationen über die Eingangssignale austauschen und die Sensorsignale auf Plausibilität prüfen.

5. Sollwertgeber nach Anspruch 1 bis 4, dadurch gekennzeichnet, daß die Eingangsschaltungen (3, 4) und die Hauptschaltungen (5, 6) aus getrennten Spannungsquellen (U₁, UII) versorgt werden.

6. Sollwertgeber nach Anspruch 1 bis 5, dadurch gekennzeichnet, daß auf einer gemeinsamen Ausgangsleitung (9) im ungestörten Normalfall das Signal nur eines Sensors, und zwar des Kraftsensors (2), ansteht.

7. Sollwertgeber nach Anspruch 1 bis 6, dadurch gekennzeichnet, daß die Hauptschaltungen (5, 6) Einrichtungen zur Prüfung der Änderungsgeschwindigkeit der Eingangssignale enthalten, welche diese auf zu schnellen Anstieg oder Abfall prüfen.

8. Sollwertgeber nach Anspruch 1 bis 7, dadurch gekennzeichnet, daß die Hauptschaltungen (5, 6) Einrichtungen zur Prüfung der Höhe der Eingangssignale im ungebremsten Zustand enthalten.

9. Sollwertgeber nach Anspruch 1 bis 8, dadurch gekennzeichnet, daß die Hauptschaltungen (5, 6) Einrichtungen zur Prüfung der Konstanz der Eingangssignale im gebremsten Zustand enthalten.

10. Sollwertgeber nach Anspruch 9, dadurch gekennzeichnet, daß die Hauptschaltungen (5, 6) eine Einrichtung zum kurzzeitigen Absenken der Bremskraft enthalten, um die Reaktion des Fahrers zu testen.

11. Sollwertgeber nach Anspruch 1 bis 10, dadurch gekennzeichnet, daß die Hauptschaltungen (5, 6) Einrichtungen zur Prüfung der gegenseitigen Zuordnung der beiden Eingangssignale über den Bremswertbereich enthalten.

## Claims

1. Set-point adjuster for the production of an electrical control variable for a brake pedal in a motor vehicle for controlling an electrical brake system, characterised by a parallel connection and subsequent evaluation of at least two sensors which operate according to different principles and which measure the force and the displacement, respectively, of the pedal, and each of which produces an electrical signal and one of which is a force sensor.

2. Set-point adjuster according to claim 1, characterised by the parallel connection of a displacement sensor (1) and a force sensor (2).

3. Set-point adjuster according to claim 2, characterised in that the output signals of the displacement sensor (1) and the force sensor (2) are filtered and/or digitised in separate electronic input circuits (3, 4).

4. Set-point adjuster according to claims 1 to 3, characterised in that there are arranged downstream of the input circuits (3, 4) main electronic circuits (5, 6) which exchange information on the input signals via lines (7, 8) and check the sensor signals for plausibility.

5. Set-point adjuster according to claims 1 to 4, characterised in that the input circuits (3, 4) and the main circuits (5, 6) are supplied from separate voltage sources (U₁, UII).

6. Set-point adjuster according to claims 1 to 5, characterised in that, in the normal fault-free state, the signal of only one sensor, namely the force sensor (2), is applied to a common output line (9).

7. Set-point adjuster according to claims 1 to 6, characterised in that the main circuits (5, 6) contain devices for checking the rate of change in the input signals, which devices check the input signals for too rapid a rise or fall.

8. Set-point adjuster according to claims 1 to 7, characterised in that the main circuits (5, 6) contain devices for checking the level of the input signals in the unbraked state.

9. Set-point adjuster according to claims 1 to 8, characterised in that the main circuits (5, 6) contain devices for checking the constancy of the input signals in the braked state.

10. Set-point adjuster according to claim 9, characterised in that the main circuits (5, 6) contain a device for briefly reducing the braking force in order to test the driver's reaction.

11. Set-point adjuster according to claims 1 to 10, characterised in that the main circuits (5, 6) contain devices for checking the relationship of the two input signals with one another over the range of brake values.

## Revendications

1. Emetteur de valeur de consigne pour produire une grandeur de commande électrique pour une pédale de frein dans un véhicule automobile, pour commander une installation de freinage électrique, caractérisé par un branchement parallèle suivi d'une interprétation d'au moins deux capeurs opérant selon des principes différents qui mesurent la force et le déplacement de la pédale, qui fournissent chacun un signal électrique et dont l'un est un capteur de force.

2. Emetteur de valeur de consigne selon la revendication 1, caractérisé par le montage en parallèle d'un capteur de déplacement (1) et d'un capteur de force (2).

3. Emetteur de valeur de consigne selon la revendication 2, caractérisé par le fait que les signaux de sortie du capteur de déplacement (1) et du capteur de force (2) sont filtrés et/ou numérisés dans des circuits d'entrée électroniques séparés (3, 4).

4. Emetteur de valeur de consigne selon les revendications 1 à 3, caractérisé par le fait que les circuits d'entrée (3, 4) sont suivis de circuits principaux électroniques (5, 6) qui, via des lignes (7, 8), échangent des informations concernant les signaux d'entrée, et contrôlent la plausibilité des signaux des capteurs.

5. Emetteur de valeur de consigne selon les revendications 1 à 4, caractérisé par le fait que les circuits d'entrée (3, 4) et les circuits principaux (5, 6) sont alimentés à partir de sources de tension séparées (U₁, UII).

6. Emetteur de valeur de consigne selon les revendications 1 à 5, caractérisé par le fait que, dans le cas normal non perturbé, le signal d'un seul capteur, à savoir celui du capteur de force (2), est présent sur une ligne de sortie commune (9).

7. Emetteur de valeur de consigne selon les revendications 1 à 6, caractérisé par le fait que les circuits principaux (5, 6) comportent des dispositifs pour contrôler la vitesse de variation des signaux d'entrée, qui contrôlent la croissance trop rapide ou la décroissance trop rapide de ces signaux d'entrée.

8. Emetteur de valeur de consigne selon les revendications 1 à 7, caractérisé par le fait que les circuits principaux (5, 6) comportent des dispositifs pour contrôler le niveau des signaux d'entrée dans la condition de non-freinage.

9. Emetteur de valeur de consigne selon les revendications 1 à 8, caractérisé par le fait que les circuits principaux (5, 6) comportent des dispositifs pour contrôler la constance des signaux d'entrée dans la condition de freinage.

10. Emetteur de valeur de consigne selon la revendication 9, caractérisé par le fait que les circuits principaux (5, 6) comportent un dispositif pour réduire brièvement la force de freinage, afin de tester la réaction du conducteur.

11. Emetteur de valeur de consigne selon les revendications 1 à 10, caractérisé par le fait que les circuits principaux (5, 6) comportent des dispositifs pour contrôler la correspondance mutuelle des deux signaux d'entrée sur l'étendue de la plage des valeurs de freinage.
